# EUROPEAN PATENT SPECIFICATION

(11) **EP 2 104 803 B1**
(45) Date of publication and mention of the grant of the patent: **07.03.2018**
(21) Application number: 07706205.7
(22) Date of filing: 04.01.2007
(51) Int. Cl.: F23R 3/28, F23R 3/36, F23N 1/00

(54) **GAS-TURBINE BURNER THAT USES, AS FUEL, GAS WITH LOW CALORIFIC VALUE**
GASTURBINENBRENNER, DER GAS MIT GERINGEM HEIZWERT ALS BRENNSTOFF VERWENDET
BRÛLEUR DE TURBINE À GAZ UTILISANT COMME CARBURANT UN GAZ À FAIBLE POUVOIR CALORIQUE

(43) Date of publication of application: 30.09.2009
(73) Proprietor: ANSALDO ENERGIA S.P.A., 16152 Genova (IT)
(72) Inventor: GOBBO, Paolo, I-17011 Albisola Superiore (IT); BONZANI, Federico, I-16156 Genova (IT); DELLA FIORE, Lorena, I-16155 Genova (IT)
(74) Representative: Lovino, Paolo
(86) International application number: PCT/IT2007/000005
(87) International publication number: WO 2008/081487

(56) References cited:
- WO-A-2005/010438
- DE-A1- 4 409 918
- DE-A1- 19 549 141
- DE-B- 1 137 266
- US-A- 4 498 288
- US-A- 5 451 160

## Description

### TECHNICAL FIELD

The present invention relates to a gas-turbine burner that uses, as fuel, a gas with low calorific value, in particular a gas deriving from iron and steel industry.

### BACKGROUND ART

The use of gases deriving from iron and steel industry in gas-turbine burners forms part of prior art. In particular, known burners are designed for using the fuel gases deriving from iron and steel industry in a constant-composition operating mode, either only with blast-furnace gas or else with a pre-set and constant percentage of blast-furnace gas, coke-oven gas, and steelworks gas (LDG). The effective use on a wide scale of known burners is limited, on the one hand, in that the calorific value of the gas is extremely low and, on the other, in that the composition of the gas is variable between the different steel plants. In fact, frequently the gas available for supply of the burner is constituted by a mixture of blast-furnace gas, steelworks gas, and coke-oven gas, the percentages of which vary sensibly according to the processes typical of each steel plant.

In other words, the known burners are far from satisfactory in so far as they find it hard to burn gases having a calorific value of less than 4.0 MJ/kg. In the second place, they have many components that have to be designed in a dedicated way as required in each particular case according to the composition and, hence, the calorific value of the gas that is available in the specific steel plant.

There is consequently felt the need to increase the flexibility of the burners of the known art and, in particular, to use mixtures of gases deriving from iron and steel industry, the calorific value of which is extremely low, for example between 3.0 and 4.0 MJ/kg, at the same time guaranteeing a stability of combustion.

WO2005010438 corresponds to the preamble of claim 1 and discloses a turbine burner achieving efficient combustion even with gases having a low calorific value.

### DISCLOSURE OF INVENTION

The aim of the present invention is to provide a gas-turbine burner that uses, as fuel, a gas with low calorific value, and that will enable the needs set forth above to be achieved in a simple and inexpensive way.

According to the present invention a gas turbine burner is provided, as defined in claim 1.

### BRIEF DESCRIPTION OF THE DRAWINGS

The invention will now be described with reference to the annexed plate of drawings, which illustrates a non-limiting example of embodiment thereof and in which:
- Figure 1 is a cross section, with parts removed for reasons of clarity, of a preferred embodiment of the gas-turbine burner according to the present invention;
- Figure 2 is a cross section of a component of the burner of Figure 1, illustrated at an enlarged scale; and
- Figure 3 is a cross section according to the line III-III of Figure 2.

### BEST MODE FOR CARRYING OUT THE INVENTION

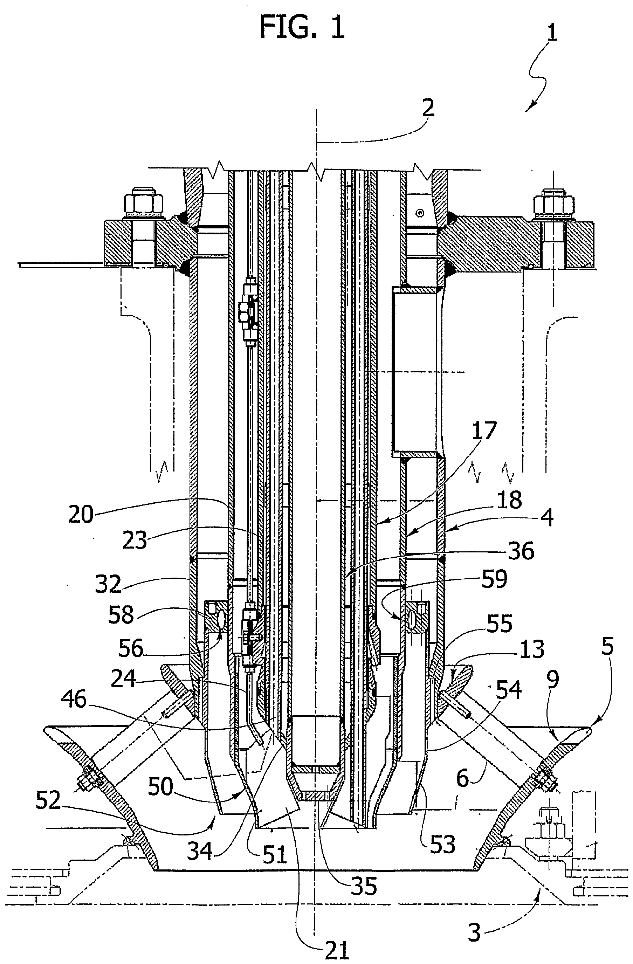

In Figure 1, designated by 1 is a burner assembly, which forms part of a gas turbine (not illustrated), which, in use, drives in rotation a shaft of an electrical machine (not illustrated) for producing electrical energy.

The assembly 1 extends along an axis 2, generates, in use, combustion in a chamber 3 (partially illustrated), and comprises a central burner 4 and a peripheral burner 5 of the "premix" type, which is coaxial with and set around the burner 4.

The burner 5 comprises a device 6 with vanes for generating vortices or turbulence, generally referred to as "swirler", which conveys in the chamber 3, with a so-called "diagonal" flow, combustion air coming from a duct 9.

The burner 5 comprises also a line 13 for supply of fuel gas, namely, natural gas. The line 13 gives out into the compartments between the vanes of the swirler 6 for introducing the fuel gas obtaining a mixture of gas and air, with a quantity of air greater than the theoretical stoichiometric ratio in order to generate a premix flame.

Once again with reference to Figure 1, the burner 4 comprises a duct 17 for conveying combustion air and a duct 18 for conveying fuel gas, namely, a gas with low calorific value, in particular a gas deriving from iron and steel industry. The ducts 17, 18 are annular and concentric sharing the axis 2, and are separated from one another by a tubular body 20, which also shares the axis 2.

In particular, the outlet of the duct 17 is defined by a device 21 with vanes ("swirler"), which generates vortices or turbulence in the flow of combustion air. The duct 17 then houses an ignition electrode 24, and an electrical power-supply line, of a known type, for bringing about an ignition spark in the compartments between the vanes of the swirler 21.

The duct 18 is delimited radially outwards by a tubular body 32, whilst the duct 17 is delimited radially inwards by a tubular body 33 that terminates with a conical portion 34. The body 33 extends along the axis 2 and is set around a gas-oil or fuel-oil jet nozzle 35, which projects axially from the centre of the swirler 21 towards the chamber 3.

The body 33 and the jet nozzle 35 define radially with respect to one another an annular channel 36, which conveys a flow of fuel gas, namely, natural gas, that exits in the compartments between the vanes of the swirler 21 through outlet holes (not illustrated) made in the portion 34, to burn with the combustion air coming from the duct 17 and to obtain a diffusion flame.

The channel 36 houses a plurality of tubes 46, which are parallel to the axis 2, are isolated from the gas that flows in the channel 36, define a so-called "pilot line", and have respective ends that traverse the portion 34 for conveying a further flow of fuel gas, namely, natural gas, in particular operating conditions of the gas turbine. In particular, the gas of the pilot line 46 is supplied to mix with the combustion air coming from the duct 17, burn together with the gas coming from the duct 18 ("co-firing"), and generate a pilot flame that stabilizes the diffusion flame generated by the gas of the duct 18.

The outlet of the duct 18 is an annular opening defined by a nozzle 50 of a convergent type, i.e., having a section of passage that narrows to accelerate the flow of gas with low calorific value.

The nozzle 50 is delimited radially, inwards, by the cylindrical axial end of the body 20 and by an external annular wall 51 of the swirler 21 and, outwards, by a wall 52.

The wall 52 comprises a conical front portion 53 and a cylindrical rear portion 54, which is fixed in a releasable way to the axial end of the body 32, in particular via a threaded coupling 55.

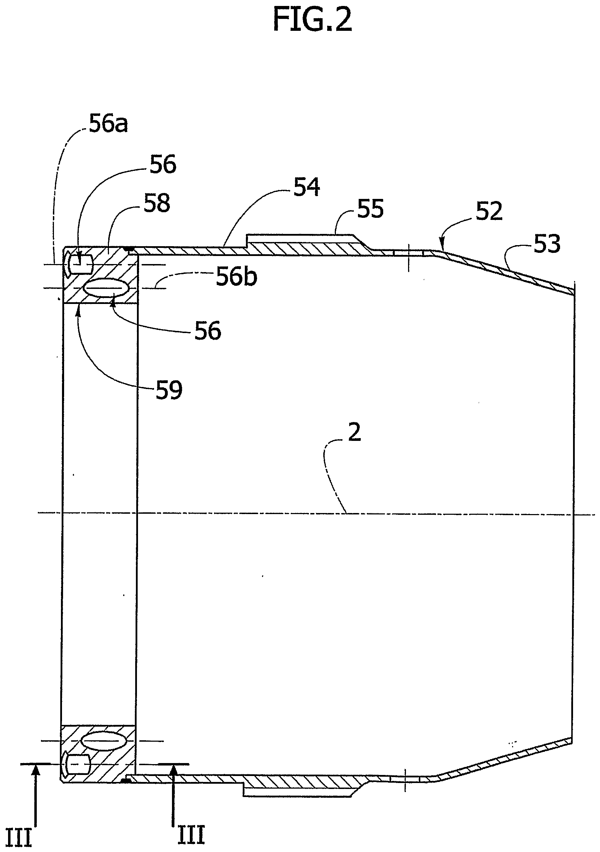

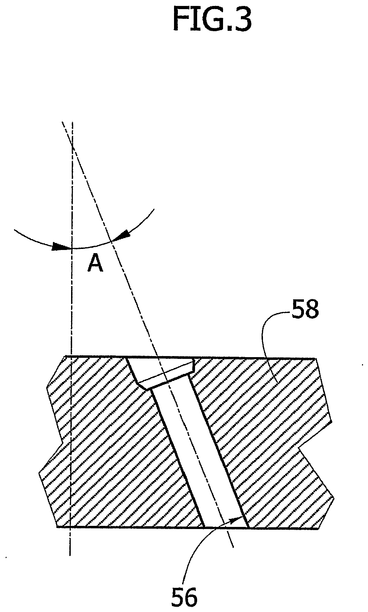

With reference to Figures 2 and 3, the duct 18 is associated to a plurality of holes 56, which are made through an annular plate 58 and have calibrated sections of passage so as to define in a precise way the flowrate of fuel gas that then passes through the nozzle 50.

The plate 58 is orthogonal to the axis 2, is fixed to the rear end of the portion 54, in particular via spot welding, and is housed in a fluid-tight way in the duct 18. In particular, fluid tightness is guaranteed, on one side, by the threaded coupling 55 and, on the other side, by resting of an internal cylindrical surface 59 of the plate 58 against the body 20.

The number of holes 56 and their section of passage is determined in such a way that the ratio between the loss of head on the plate 58 and the pressure of the chamber 3 is higher than 5% in the conditions of minimum load envisaged in the operating mode with gas coming from the duct 18 (the greater the loss of head, the lower the sensitivity with respect to possible phenomena of oscillation of pressure in the chamber 3).

In particular, the holes 56 are constituted by two rings 56a, 56b of holes made along respective concentric circumferences. In each ring 56a, 56b, the holes are spaced at equal angular distances apart from one another about the axis 2. The axes of the holes 56 are rectilinear and are inclined in a tangential direction with respect to the axis 2 by a pre-set angle A. Said angle of inclination bestows upon the flow of gas a turbulent motion of swirl, similar to that created by vanes, in the nozzle 50. The direction in which the holes are inclined with respect to the axis 2 is the same for the two rings 56a and 56b.

In particular, in the case where the gas supplied by the duct 18 has a relatively high content of blast-furnace gas, it is necessary to obtain a relatively high turbulence so as to achieve a higher degree of mixing with the air.

The flowrate of fuel gas with low calorific value that arrives at the nozzle 50 is appropriately calibrated and pre-set, by determining, at the start of the service life of the burner, the number and section of passage of the holes 56, according to the calorific value and/or the composition of the fuel gas with low calorific value that is available. According to the invention, two different types of configurations are described, which can be installed as alternatives to one another:
- for a fuel gas having a flame speed lower than 300 mm/s, corresponding substantially to a reference condition, in which the fuel gas contains a percentage of blast-furnace gas that bestows a thermal power not lower than 70% of the global thermal power (or thermal input), and a percentage of coke-oven gas and LDG not higher than the remaining 30%, the number of holes 56 is between thirty-six and thirty-eight, and the holes have a diameter comprised between 11.5 and 12 mm, and have an angle A of inclination of approximately 22°;
- for a fuel gas having a flame speed comprised between 300 mm/s and 400 mm/s, corresponding substantially to a reference condition, in which the fuel gas contains a percentage of blast-furnace gas that bestows a thermal power lower than 70% of the global thermal power (or thermal input), and a percentage of coke-oven gas and LDG higher than the remaining 30%, the holes 56 are eighty in number, have a diameter comprised between 8.5 and 9 mm, and have an angle A of inclination of between 17° and 22°.

Operation of the assembly 1 is described in what follows. Ignition of the assembly 1 is obtained by supplying natural gas through the supply line defined by the channel 36. The increase in the speed of the gas turbine is obtained once again by supplying natural gas from the line 36 until a load of 50% of the maximum load is reached.

Next, there is a transition from operation of diffusion with natural gas to operation with gas with low calorific value (deriving from iron and steel industry), by supplying said gas from the duct 18.

The supply of gas is set in the following way:
- if the calorific value of the gas from the duct 18 is higher than 4.0 MJ/kg, then the flowrate of the natural gas from the pilot line, formed by the tubes 46, is zero;
- if the calorific value of the gas from the duct 18 is comprised between 3.0 MJ/kg and 4.0 MJ/kg, then a flowrate of natural gas is supplied from the pilot line 46 for stabilizing the combustion obtained: said flowrate contributes to the global thermal input for an amount not higher than 10% in the conditions of maximum load (for example, up to a maximum of 1 kg/s) .

In particular, the supply of the flow of natural gas in the pilot line 46 is controlled and varied in a continuous way as a function of the composition and/or the calorific value of the gas with low calorific value that arrives at the duct 18. The composition and/or calorific value are detected via sensors of a known type (calorimeter, gas chromatographs, etc.).

In the case where an interruption of the load is necessary, the flowrate of gas with low calorific value from the duct 18 is reduced down to a pre-set minimum, and simultaneously the flowrate of natural gas from the pilot line 46 is increased up to a pre-set maximum, which is sufficient to run the gas turbine in loadless conditions. A subsequent rise in load starting from this condition is performed with the gas having low calorific value from the duct 18, without the use of natural gas from the line 36.

The burner 5 of the premix type is used for burning natural gas in the event of unavailability of the gas with low calorific value. In this way, the use of steam and/or of inert gases (for example nitrogen) that would be necessary for limiting the emissions of nitrogen oxides in the burnt gases if, for example, the line 36 were used is avoided.

From the foregoing it appears evident that the burner 4 enables burning also of gas with low calorific value by appropriately choosing the geometry of the plate 58 and of the nozzle 50.

In particular, via a releasable-connection device, such as the threaded coupling 55, it is possible to render design and construction of the burner 4 flexible, in so far as it is necessary to design and make in a dedicated way basically only the holes of the plate 58 and the shape of the wall 52, on the basis of the type of fuel gas with low calorific value that is available.

It is then possible to modify easily a configuration already envisaged by replacing just the component represented by the plate 58 and the wall 52, in the case where the composition of the gas with low calorific value were to be changed.

Furthermore, the component represented by the plate 58 and the wall 52 can be used for updating a standard burner of current production for use with gas with low calorific value.

By calibrating the section of passage of the fuel gas with low calorific value via the plate 58 and, if necessary, using the pilot line 46 for adding natural gas in the chamber 3, it is possible to maintain stable combustion also with gases having a calorific value comprised between 3.0 and 4.0 MJ/kg.

In other words, the flexibility of the burner 4 is extremely high in so far as the stabilization of combustion effected via the pilot line 46 enables burning of any type of gas with low calorific value. In particular, it is also possible to control the supply of natural gas from the pilot line 46 in a continuous way by varying the quantity of natural gas introduced according to the composition of the gas with low calorific value reaching the duct 18.

Operation is possible using gas with low calorific value throughout the range of operation of the gas turbine. The burner 5 is used only in the case where there are not available gases with low calorific value.

Finally, from the foregoing it emerges clearly that modifications and variations can be made to the burner 4 and to the assembly 1 described herein with reference to the attached figures, without thereby departing from the sphere of protection of the present invention.

In particular, the distribution of the holes 56 could be different; for example, the holes 56 could be arranged in a single ring.

## Claims

1. A gas turbine burner (4) comprising:
- a first duct (18), in which a fuel gas with low calorific value is supplied in use, and a second duct (17), in which combustion air is supplied in use; said first and second ducts (17, 18) being concentric with respect to a longitudinal axis (2); the outlet of said first duct (18) being defined by a convergent nozzle (50);
- a swirler (21), set at the outlet of said second duct (17);
- a plate (58), housed in said first duct (18) in fluid-tight manner, upstream of said nozzle (50), and having a plurality of holes (56) with a calibrated section of passage; said holes (56) being inclined in a tangential direction with respect to said longitudinal axis (2) by a pre-set angle (A) ;
**characterized in that**:
- the burner comprises releasable means of connection (55) for connecting said plate (58) in a fixed position and rendering said plate interchangeable,
- said plate (58) has a number of holes (56) between thirty-six and thirty-eight; the diameter of said holes (56) being between 11.5 and 12 mm; the angle of inclination (A) of said holes (56) being equal to approximately 22° for use with fuel gases having flame speed lower than 300mm/s; or
- said plate (58) has a number of holes (56) equal to eighty; the diameter of said holes (56) being between 8.5 and 9 mm; the angle of inclination (A) of said holes (56) being between 17° and 22° for use with fuel gases having a flame speed comprised between 300 mm/s and 400 mm/s.

2. The burner according to Claim 1, **characterized in that** said nozzle (50) is delimited radially by a wall (52), which is fixed to said plate (58) and carries said releasable means of connection (55).

3. The burner according to Claim 1 or 2, **characterized in that** said releasable means of connection (55) comprise a threaded coupling.

4. The burner according to any one of the preceding claims, **characterized in that** said holes (56) are spaced at equal angular distances apart from one another about said longitudinal axis (2).

5. The burner according to any one of the preceding claims, **characterized in that** said holes (56) are made in said plate (58) along two concentric circumferences.

6. The burner according to any one of the preceding claims, **characterized in that** it comprises a pilot line (46), in which natural gas is supplied in use.

7. The burner according to Claim 6, **characterized in that** it comprises a third duct (36), in which natural gas is supplied in use; said first, second and third ducts (17, 18, 36) being concentric with respect to one another.

8. The burner according to Claim 7, **characterized in that** said second duct (17) is set radially between said first duct (18) and said third duct (36).

9. A burner assembly of a gas turbine comprising a burner built according to any one of the preceding claims, in combination with a coaxial premix burner fed, in use, with natural gas.

10. A method for supplying fuel gas to a burner built according to Claim 6, **characterized in that** a flowrate of natural gas from said pilot line (46) is set if the calorific value of the gas with low calorific value from said first duct (18) is lower than 4.0 MJ/kg.

11. The method according to Claim 10, **characterized in that** the flowrate of natural gas from said pilot line (46) is varied in a continuous way as a function of the calorific value and/or of the composition of said gas with low calorific value.

## Patentansprüche

1. Gasturbinenbrenner (4), umfassend:
- einen ersten Kanal (18), in den im Betrieb ein Brenngas mit niedrigem Heizwert eingeleitet wird, und einen zweiten Kanal (17), in den im Betrieb Verbrennungsluft eingeleitet wird; wobei der erste und der zweite Kanal (17, 18) in Bezug auf eine Längsachse (2) konzentrisch sind; wobei der Auslass des ersten Kanals (18) durch eine konvergente Düse (50) begrenzt ist;
- einen an dem Auslass des zweiten Kanals (17) angeordneten Verwirbler (21);
- eine Platte (58), die vor der Düse (50) fluiddicht in dem ersten Kanal (18) angeordnet ist und eine Vielzahl von Öffnungen (56) mit einem geeichten Durchgangsabschnitt aufweist, wobei die Öffnungen (56) in Bezug auf die Längsachse (2) in einer tangentialen Richtung in einem vorgegebenen Winkel geneigt sind; **dadurch gekennzeichnet, dass**:
- der Brenner lösbare Verbindungsvorrichtungen (55) zur Verbindung der Platte (58) in einer festen Position umfasst, so dass die Platte auswechselbar ist,
- die Platte (58) eine Anzahl von Öffnungen (56) zwischen sechsunddreißig und achtunddreißig aufweist, deren Durchmesser zwischen 11,5 und 12 mm beträgt, wobei der Neigungswinkel (A) der Öffnungen (56) ungefähr gleich 22° beträgt, so dass sie zur Benutzung mit Brenngasen mit einer Flammengeschwindigkeit von weniger als 300mm/s verwendet werden können; oder
- die Platte (58) eine Anzahl von Öffnungen (56) gleich achtzig aufweist, deren Durchmesser zwischen 8,5 und 9 mm beträgt, wobei der Neigungswinkel (A) der Öffnungen (56) zwischen 17° und 22° beträgt, so dass sie zur Benutzung mit Brenngasen mit einer Flammengeschwindigkeit zwischen 300mm/s und 400 mm/s verwendet werden können.

2. Brenner nach Anspruch 1, **dadurch gekennzeichnet, dass** die Düse (50) radial durch eine Wand (52) begrenzt ist, die an der Platte (58) befestigt ist und die lösbaren Verbindungsvorrichtungen (55) trägt.

3. Brenner nach Anspruch 1 oder 2, **dadurch gekennzeichnet, dass** die lösbaren Verbindungsvorrichtungen (55) einen Gewindeanschluss umfassen.

4. Brenner nach einem der vorstehenden Ansprüche, **dadurch gekennzeichnet, dass** die Öffnungen (56) um die Längsachse (2) in gleichmäßigen Winkelabständen voneinander beabstandet sind.

5. Brenner nach einem der vorstehenden Ansprüche, **dadurch gekennzeichnet, dass** die Öffnungen (56) entlang zweier konzentrischer Umfänge in der Platte (58) ausgebildet sind.

6. Brenner nach einem der vorstehenden Ansprüche, **dadurch gekennzeichnet, dass** der Brenner eine Pilotleitung (46) umfasst, in die während des Betriebs Erdgas eingeleitet wird.

7. Brenner nach Anspruch 6, **dadurch gekennzeichnet, dass** der Brenner einen dritten Kanal (36) umfasst, in den während des Betriebs Erdgas eingeleitet wird, wobei der erste, zweite und dritte Kanal (17, 18, 36) konzentrisch zueinander sind.

8. Brenner nach Anspruch 7, **dadurch gekennzeichnet, dass** der zweite Kanal (17) radial zwischen dem ersten Kanal (18) und dem dritten Kanal (36) angeordnet ist.

9. Brenneranordnung einer Gasturbine, die einen nach einem der vorstehenden Ansprüche gebauten Brenner in Verbindung mit einem koaxialen Vormischbrenner umfasst, der während des Betriebs mit Erdgas versorgt wird.

10. Verfahren zur Einleitung von Brenngas in einen nach Anspruch 6 gebauten Brenner, **dadurch gekennzeichnet, dass** die Durchflussmenge des Erdgases aus der Pilotleitung (46) eingestellt wird, wenn der Heizwert des Gases mit niedrigem Heizwert aus dem ersten Kanal (18) niedriger ist als 4,0 MJ/kg.

11. Verfahren nach Anspruch 10, **dadurch gekennzeichnet, dass** die Durchflussmenge des Erdgases aus der Pilotleitung (46) als Funktion des Heizwertes und/oder der Zusammensetzung des Gases mit niedrigem Heizwert kontinuierlich verändert wird.

## Revendications

1. Brûleur de turbine à gaz (4) comprenant :
- un premier conduit (18), dans lequel un gaz combustible ayant une faible valeur calorifique est fourni lors de l'utilisation, et un deuxième conduit (17), dans lequel de l'air de combustion est fourni lors de l'utilisation ; lesdits premier et deuxième conduits (17, 18) étant concentriques par rapport à un axe longitudinal (2) ; la sortie dudit premier conduit (18) étant définie par un injecteur convergent (50) ;
- une coupelle de turbulence (21), placée à la sortie dudit deuxième conduit (17) ;
- une plaque (58), logée dans ledit premier conduit (18) d'une manière étanche au fluide, en amont dudit injecteur (50), et ayant une pluralité de trous (56) avec une section de passage calibrée ; lesdits trous (56) étant inclinés dans une direction tangentielle par rapport audit axe longitudinal (2) d'un angle prédéfini (A) ;
**caractérisé en ce que** :
- le brûleur comprend des moyens de raccordement détachables (55) pour raccorder ladite plaque (58) dans une position fixe et rendre ladite plaque interchangeable,
- ladite plaque (58) a un nombre de trous (56) entre trente-six et trente-huit ; le diamètre desdits trous (56) étant entre 11,5 et 12 mm ; l'angle d'inclinaison (A) desdits trous (56) étant égal à environ 22° pour une utilisation avec des gaz combustibles ayant une vitesse de flamme inférieure à 300 mm/s ; ou
- ladite plaque (58) a un nombre de trous (56) égal à quatre-vingt ; le diamètre desdits trous (56) étant entre 8,5 et 9 mm ; l'angle d'inclinaison (A) desdits trous (56) étant entre 17° et 22° pour une utilisation avec des gaz combustibles ayant une vitesse de flamme comprise entre 300 mm/s et 400 mm/s.

2. Brûleur selon la revendication 1, **caractérisé en ce que** ledit injecteur (50) est délimité radialement par une paroi (52), qui est fixée à ladite plaque (58) et porte lesdits moyens de raccordement détachables (55).

3. Brûleur selon la revendication 1 ou 2, **caractérisé en ce que** lesdits moyens de raccordement détachables (55) comprennent un accouplement fileté.

4. Brûleur selon l'une quelconque des revendications précédentes, **caractérisé en ce que** lesdits trous (56) sont espacés à des distances angulaires égales les uns des autres autour dudit axe longitudinal (2).

5. Brûleur selon l'une quelconque des revendications précédentes, **caractérisé en ce que** lesdits trous (56) sont réalisés dans ladite plaque (58) le long de deux circonférences concentriques.

6. Brûleur selon l'une quelconque des revendications précédentes, **caractérisé en ce qu'**il comprend une ligne pilote (46), dans laquelle du gaz naturel est fourni lors de l'utilisation.

7. Brûleur selon la revendication 6, **caractérisé en ce qu'**il comprend un troisième conduit (36), dans lequel du gaz naturel est fourni lors de l'utilisation ; lesdits premier, deuxième et troisième conduits (17, 18, 36) étant concentriques les uns par rapport aux autres.

8. Brûleur selon la revendication 7, **caractérisé en ce que** ledit deuxième conduit (17) est placé radialement entre ledit premier conduit (18) et ledit troisième conduit (36).

9. Ensemble de brûleur d'une turbine à gaz comprenant un brûleur conçu selon l'une quelconque des revendications précédentes, en combinaison avec un brûleur à prémélange coaxial alimenté, lors de l'utilisation, avec du gaz naturel.

10. Procédé de fourniture de gaz combustible à un brûleur conçu selon la revendication 6, **caractérisé en ce qu'**un débit de gaz naturel provenant de ladite ligne pilote (46) est réglé si la valeur calorifique du gaz ayant une faible valeur calorifique provenant dudit premier conduit (18) est inférieure à 4,0 MJ/kg.

11. Procédé selon la revendication 10, **caractérisé en ce que** le débit de gaz naturel provenant de ladite ligne pilote (46) est modifié d'une manière continue en fonction de la valeur calorifique et/ou de la composition dudit gaz ayant une faible valeur calorifique.
